# EUROPÄISCHE PATENTSCHRIFT

(11) **EP 2 252 385 B1**
(45) Veröffentlichungstag und Bekanntmachung des Hinweises auf die Patenterteilung: **12.09.2012**
(21) Anmeldenummer: 09718749.6
(22) Anmeldetag: 27.02.2009
(51) Int. Cl.: B01D 17/04, C08G 73/02, C10G 33/04

(54) **VERWENDUNG VON ALKOXYLIERTEN POLYALKANOLAMINEN ZUM SPALTEN VON ÖL-WASSER-EMULSIONEN**
USE OF ALKOXYLATED POLYALKANOLAMINES FOR BREAKING OIL-WATER EMULSIONS
UTILISATION DE POLYALCANOLAMINES ALCOXYLÉES POUR SÉPARER DES ÉMULSIONS HUILE DANS L'EAU

(30) Priorität: 04.03.2008 EP 08152236
(43) Veröffentlichungstag der Anmeldung: 24.11.2010
(73) Patentinhaber: BASF SE, 67056 Ludwigshafen (DE)
(72) Erfinder: EBERT, Sophia, 68165 Mannheim (DE); EICHHORN, Andreas, 67158 Ellerstadt (DE)
(86) Internationale Anmeldenummer: PCT/EP2009/052339
(87) Internationale Veröffentlichungsnummer: WO 2009/112379

(56) Entgegenhaltungen:
- EP-A- 0 222 587
- EP-A- 1 650 246
- WO-A-2009/060060
- DE-A1- 4 435 688
- DE-B3- 10 329 723
- US-A- 4 840 748

## Beschreibung

Die Erfindung betrifft die Verwendung von alkoxylierten Polyalkanolaminen zum Spalten von Öl-Wasser-Emulsionen, insbesondere zum Spalten von Rohölemulsionen.

Erdöl fällt bei der Förderung in der Regel als relativ stabile Wasser-Öl-Emulsion an. Diese kann je nach Alter und Lagerstätte bis zu 95 Gew. % Wasser enthalten. Bei dem Wasser kann es sich einerseits um in der Lagerstätte bereits vorhandenes Wasser handeln, sowie andererseits um Wasser, welches im Zuge sekundärer und/oder tertiärer Erdölförderung durch Injektionsbohrungen in die Lagerstätte eingepresst wird. Im Wasser sind im Allgemeinen noch größere Mengen an Salzen gelöst, beispielsweise Alkali- oder Erdalkalimetallsalze, und weiterhin enthält die Emulsion üblicherweise auch Feststoffe, welche mit der Öl-Wasser-Emulsion aus dem Bohrloch ausgetragen werden. Stabilisiert werden die Wasser-Öl-Emulsionen durch natürliche, im Rohöl vorkommende Emulgatoren, wie beispielsweise Naphthensäuren. Sie können auch zusätzlich durch nicht natürlich vorkommende Emulgatoren stabilisiert sein, wie beispielsweise Tensiden, welche zur tertiären Erdölförderung in die Erdöllagerstätte eingebracht wurden, und nun mit dem so geförderten Öl wieder ausgetragen werden.

Wasser, Salze und Feststoffe müssen vor der Verarbeitung des Rohöls in der Raffinerie entfernt werden. Raffinerien verlangen häufig, dass der Wassergehalt des angelieferten Rohöls nicht mehr als 1 % betragen darf. Aus ökonomischen Gründen erfolgt das Entfernen des Wassers und der weiteren Komponenten aus dem Rohöl noch am Ort der Förderung, um den unwirtschaftlichen Transport von Wasser zu vermeiden und Korrosionsprobleme zu verhindern oder zumindest zu minimieren.

Die Phasentrennung der Wasser-Öl-Emulsion soll dabei möglichst schnell und möglichst vollständig erfolgen. Nur so können angesichts der großen Fördervolumina die Anlagen zur Phasentrennung, wie beispielsweise Absetztanks, möglichst klein gehalten werden. Auf Förderplattformen auf See ist die Verwendung möglichst kleiner, kompakter Anlagen zur Phasentrennung angesichts des begrenzten Platzes schon eine bautechnische Notwendigkeit, und generell erfordern natürlich kleine Anlagen geringere Investitionskosten als große Anlagen. Eine oft gestellte Anforderung ist es, dass die Phasentrennung nicht mehr als ca. 20 bis 30 min benötigen sollte.

Es ist bekannt, zur Beschleunigung der Phasentrennung von Öl-Wasser-Emulsionen Emulsionsspalter (Demulgatoren) einzusetzen. Emulsionsspalter sind grenzflächenaktiven Substanzen, die die Öl-Wasser-Grenzflächen beeinflussen und somit zu einer schnelleren Phasentrennung beitragen.

Die Trennung von Öl-Wasser-Emulsionen erfolgt häufig nach einem zweistufigen Verfahren mit jeweils unterschiedlichen Anforderungen. In einer ersten Stufe wird -wie oben geschildert- die geförderte Emulsion in eine Öl- und in eine Wasserphase gespalten. Hierbei verbleiben üblicherweise in der Ölphase noch geringe Restmengen Wasser. Solange der Wassergehalt unterhalb einer kritischen Grenze bleibt - Raffinerien verlangen häufig, dass der Wassergehalt des angelieferten Rohöls nicht mehr als 1 % betragen darf- ist dies aber im Regelfalle unkritisch. Auch die Wasserphase kann noch geringe Mengen Restöl enthalten. Da ölhaltiges Wasser beim Überschreiten der Grenzwerte nicht ungereinigt entsorgt werden kann, schließt sich meistens noch ein Entölungsschritt (Deoiling) an, bei dem auch noch Restmengen von Öl aus der Wasserphase entfernt werden. Hierzu können auch Demulgatoren eingesetzt werden; in der Regel werden aber andere eingesetzt, als bei der eigentlichen Emulsionsspaltung.

Es ist bekannt, Polyalkanolamine zur Trennung von Öl-in-Wasser-Emulsionen, insbesondere zur Entölung einzusetzen.

US 2,407,895 beschreibt die Verwendung von Polyalkanolaminen zur Spaltung von Öl-in-Wasser-Emulsionen. Die Polyalkanolamine werden durch Kondensation von sekundären oder tertiären Aminoalkoholen bei 200 bis 270°C, vorzugsweise in Gegenwart von Katalysatoren wie Natriumhydroxid hergestellt. Als Ausgangsmaterialien können auch mit bis zu 3 Alkylenoxideinheiten alkoxylierte Aminoalkohole eingesetzt werden. Der Ölgehalt in der zu trennenden Emulsionen beträgt im Allgemeinen weniger als 1 Gew. %. bzgl. der Emulsion.

US 4,505,839, US 4,731,481 und US 4,840,748 offenbaren Polyalkanolamine mit einer mittleren molaren Masse Mₙ von 325 bis 525 g/mol und deren Verwendung als Hilfsmittel zum Trennen von Öl-in-Wasser-Emulsionen, insbesondere solchen mit einem Ölgehalt von weniger als 1 Gew. %. Die Kondensation erfolgt unter Katalyse durch Zinkchlorid/Essigsäure oder Aluminiumsulfat/Essigsäure.

US 4,404,362 offenbart Blockcopolymere aus Ethanolaminen und deren Verwendung und deren Verwendung als Hilfsmittel zum Trennen von Öl-in-Wasser-Emulsionen, insbesondere solchen mit einem Ölgehalt von weniger als 1 Gew. %.

EP 441 198 A2 offenbart ein Herstellverfahren für Polyalkanolamine, bei dem die Kondensation in Gegenwart von phosphoriger Säure und/oder unterphosphoriger Säure vorgenommen wird, sowie deren Verwendung als Demulgatoren für Öl-in-Wasser-Emulsionen. Im Anwendungsbeispiel wird eine Öl-in-Wasser-Emulsion mit einem Ölgehalt von 430 ppm getrennt.

Es ist auch bekannt, zur Verwendung als Demulgatoren bestimmte Polyalkanolamine nachträglich mit bestimmten Reagenzien zu funktionalisieren. Hierdurch werden terminal funktionalisierte Polyalkanolamine erhalten. DE 31 36 281 A1 offenbart die Funktionalisierung mit Bisglycidylethern, DE 32 06 459 A1 die Funktionalisierung mit Xylendichloriden, und EP 444 515 A1 offenbart die Funktionalisierung mit Harnstoff, Harnstoffderivaten und Urethanen.

Keine der zitierten Schriften offenbart aber alkoxylierte Polyalkanolamine.

Unsere noch unveröffentlichte Anmeldung EP 07120393.9 offenbart alkoxylierte Polyalkanolamine. Deren Herstellung erfolgt mittels eines zweistufigen Verfahrens, bei dem in einem ersten Schritt Aminoalkoholen zu Polyalkanolaminen kondensiert werden, und die erhaltenen Polyalkanolamine in einem zweiten Schritt alkoxyliert werden. Die Verwendung der erhaltenen alkoxylierten Polyalkanolamine zur Trennung von Öl-Wasser-Emulsionen ist nicht offenbart.

Neben der Anforderung einer schnellen und vollständigen Trennung ist zu berücksichtigen, dass die Zusammensetzung des Erdöls von Ölfeld zu Ölfeld variieren kann und sich auch die Zusammensetzung der geförderten Öl-Wasser-Emulsion im Laufe der Zeit verändern kann. Je nach dem Wasseranteil in der Emulsion kann es sich um Öl-in-Wasser oder Wasser-in-Öl-Emulsionen handeln. Es ist deswegen erforderlich, den Demulgator an die jeweilige Verwendung anzupassen. Häufig werden hierzu Mischungen verschiedener Demulgatoren eingesetzt.

Aufgabe der vorliegenden Erfindung war es, verbesserte Demulgatoren zur Spaltung von Öl-Wasser-Emulsionen, insbesondere von Rohölemulsionen, bereit zu stellen, mit denen eine schnellere Phasentrennung erreicht werden kann. Diese sollten einfach und kostengünstig herzustellen sein und auf einfache Art und Weise an unterschiedliche Trennprobleme anzupassen sein.

Gelöst wird die Aufgabe durch die Verwendung von alkoxylierten Polyalkanolaminen als Demulgatoren zum Spalten von Öl-Wasser-Emulsionen, insbesondere zum Spalten von Rohölemulsionen.

Dementsprechend wurde die Verwendung von alkoxylierten Polyalkanolaminen zum Spalten von Öl-Wasser-Emulsionen gefunden, welche nach dem folgenden Verfahren erhältlich sind:
(A) Kondensieren von mindestens einem Trialkanolamin der allgemeinen Formel N(R¹-OH)₃ (la) und/oder mindestens einem Dialkanolamin der allgemeinen Formel R²-N(R¹-OH)₂ (Ib) zu einem Polyalkanolamin (II),
   wobei
   - die Reste R¹ unabhängig voneinander für einen zweiwertigen, linearen oder verzweigten aliphatischen Kohlenwasserstoffrest mit 2 bis 6 Kohlenstoffatomen, und
   - die Reste R² für Wasserstoff und/oder lineare oder verzweigte aliphatische, • cycloalphatische und/oder aromatische Kohlenwasserstoffreste mit 1 bis 30 Kohlenstoffatomen stehen,
(B) Alkoxylieren des erhaltenen Polyalkanolamins (II) mit C₂- bis C₁₂-Alkylenoxiden, mit der Maßgabe, dass die Menge an Ethylenoxid und/oder Propylenoxid mindestens 80 Gew. % bezüglich der Menge aller eingesetzten Alkylenoxide beträgt, und wobei der durchschnittliche Alkoxylierungsgrad 1 bis 200 pro OH-Gruppe und -sofern vorhanden- sekundärer Aminogruppe beträgt.

### In einer bevorzugten Ausführungsform der Erfindung handelt es sich bei den Alkylenoxiden um Ethylenoxid und/oder Propylenoxid wobei die gebildeten Polyoxyalkylengruppen Blockstruktur aufweisen.

Zu der Erfindung ist im Einzelnen das Folgende auszuführen:

Zur Ausführung der Erfindung werden alkoxylierte Polyalkanolamine als Demulgatoren zum Trennen von Öl-Wasser-Emulsionen eingesetzt. Selbstverständlich können auch Gemische mehrerer verschiedener alkoxylierter Polyalkanolamine eingesetzt werden.

### Beschreibung der verwendeten alkoxylierten Polyalkanolamine

Die erfindungsgemäß verwendeten alkoxylierten Polyalkanolamine sind mittels einer zweistufigen Reaktion erhältlich, bei der man in einer ersten Reaktionsstufe (A) mindestens ein Trialkanolamin der allgemeinen Formel (Ia) und/oder ein Dialkanolamin der allgemeinen Formel (Ib) sowie optional weitere, mindestens zwei Hydroxy- und/oder Aminogruppen aufweisende Komponenten (Ic) sowie optional weitere Komponenten (Id) in einer Polykondensationsreaktion miteinander zu einem Polyalkanolamin (II) umsetzt.

Das erhaltene Polyalkanolamin (II) wird in einer zweiten Reaktionsstufe (B) alkoxyliert, wobei man ein terminale Polyalkoxygruppen aufweisendes alkoxyliertes Polyalkanolamin (III) erhält.

Optional kann das alkoxylierte Polyalkanolamin (III) in einer dritten Reaktionsstufe (C) mit Funktionalisierungsreagenzien umgesetzt werden, wobei funktionalisierte alkoxylierte Polyalkanolamine (IV) entstehen.

### Stufe (A)

Die in Stufe (A) eingesetzten Trialkanolamine (Ia) und/oder Dialkanolamine (Ib) weisen die allgemeinen Formeln N(R¹-OH)₃ (Ia) bzw. R²-N(R¹-OH)₂ (Ib) auf.

Bei den Resten R¹ handelt es sich hierbei jeweils unabhängig voneinander um einen zweiwertigen, linearen oder verzweigten aliphatischen Kohlenwasserstoffrest mit 2 bis 6 Kohlenstoffatomen, bevorzugt 2 oder 3 Kohlenstoffatomen. Beispiele derartiger Reste umfassen Ethan-1,2-diyl, Propan-1,3-diyl, Propan-1,2-diyl, 2-Methylpropan-1,2-diyl, 2,2-Dimethylpropan-1,3-diyl, Butan-1,4-diyl, Butan-1,3-diyl (= 1-methylpropane-1,3-diyl), Butan-1,2-diyl, Butan-2,3-diyl, 2-Methyl-butan-1,3-diyl, 3-Methyl-butan-1,3-diyl (= 1,1-Dimethylpropan-1,3-diyl), Pentan-1,4-diyl, Pentan-1,5-diyl, Pentan-2,5-diyl, 2-Methylpentan-2,5-diyl (= 1,1-Dimethylbutan-1,3-diyl) und Hexan-1,6-diyl. Bevorzugt handelt es sich um Ethan-1,2-diyl, Propan-1,3-diyl oder Propan-1,2-diyl.

Bei dem Rest R² handelt es sich um Wasserstoff und/oder lineare oder verzweigte aliphatische, cycloalphatische und/oder aromatische Kohlenwasserstoffreste mit 1 bis 30 Kohlenstoffatomen, bevorzugt 1 bis 20 Kohlenstoffatomen und besonders bevorzugt 1 bis 10 Kohlenstoffatomen. Aromatische Reste können selbstverständlich auch aliphatische Substituenten aufweisen. Bevorzugte handelt es sich bei R² um Wasserstoff oder aliphatische Kohlenwasserstoffreste mit 1 bis 4 C-Atomen.

Beispiele bevorzugter Trialkanolamine (Ia) umfassen Triethanolamin, Triisopropanolamin und Tributan-2-olamin, besonders bevorzugt ist Triethanolamin.

Beispiele bevorzugter Diialkanolamine (Ib) umfassen Diethanolamin, N-Methyldiethanolamin, N,N-bis-(2-hydroxypropyl)-N-methylamin, N,N-bis-(2-hydroxybutyl)-N-methylamin, N-Isopropyldiethanolamin, N-n-Butyldiethanolamin, N-sec-Butyldiethanolamin, N-Cyclohexyldiethanolamin, N-Benzyldiethanolamin, N-4-Tolyldiethanolamin oder N,N-Bis-(2-Hydroxyethyl)-anilin. Besonders bevorzugt ist Diethanolamin.

Neben den Trialkanolaminen (Ia) und/oder Dialkanolaminen (Ib) können optional weitere, mindestens zwei Hydroxy- und/oder Aminogruppen aufweisende Komponenten Komponenten (Ic) zur Polykondensation eingesetzt werden.

In einer bevorzugten Ausführungsform handelt es sich bei den Komponenten (Ic) um Polyole der allgemeinen Formel R³(OH)ₙ, wobei n für eine natürliche Zahl von 2 bis 4 steht und R³ für einen n-wertigen linearen oder verzweigten aliphatischen, cycloaliphatischen oder aromatischen Kohlenwasserstoffrest mit 2 bis 10 Kohlenstoffatomen.

Beispiele derartiger Polyole umfassen aliphatische Polyole wie Ethylenglykol, Propylenglykol, Butylenglykol, Glycerin, Tri(hydroxymethyl)ethan, Tri(hydroxymethyl)propan, Sorbitol, Neopentylglykol oder Pentaerythrit, cycloaliphatische Polyole wie 1,4-Dihydroxycyclohexan oder arylaliphatische Polyole wie 1,4-bis-(Hydroxymethyl)benzol. Bevorzugt handelt es sich um Glycerin.

In einer weiteren bevorzugten Ausführungsform handelt es sich bei den Komponenten (Ic) um Polyamine der allgemeinen Formel R⁴(NHR⁵)ₘ, wobei m für eine natürliche Zahl von 2 bis 4 steht, R⁴ für einen m-wertigen linearen oder verzweigten aliphatischen, cycloaliphatischen oder aromatischen Kohlenwasserstoffrest mit 2 bis 10 Kohlenstoffatomen und die Reste R⁵ unabhängig voneinander für H, einen Kohlenwasserstoffrest der Bedeutung von R² stehen, wobei weiterhin auch zwei Reste R⁵ zusammen für eine Alkylengruppe, bevorzugt eine lineare 1,ω-Alkylengruppe mit 2 bis 6 Kohlenstoffatomen stehen können. Bevorzugt steht R⁵ für H oder eine Methylgruppe.

Beispiele derartiger Polyamine umfassen Ethylendiamin, N,N'-Dimethylethylendiamin, N,N'-Diethylethylendiamin, 1,2-Diaminopropan, 1,3-Diaminopropan, 1,6-Diaminohexan, 1,2-Diaminocyclohexan, 1,3-Diaminocyclohexan, 1,4-Diaminocyclohexan oder Piperazin.

Sofern vorhanden, werden die mindestens zwei Hydroxy- und/oder Aminogruppen aufweisenden Komponenten (Ic) bevorzugt in einer Menge von nicht mehr als 50 Gew. % bezüglich der Gesamtenge aller zur Kondensation eingesetzten Komponenten, also (la) und/oder (Ib), (Ic) sowie ggf. (Id) eingesetzt.

Neben den Komponenten (la) und/oder (Ib) sowie gegebenenfalls (Ic) können optional auch noch weitere, von (Ia), (Ib) oder (Ic) verschiedene Komponenten (Id) zur Kondensation eingesetzt werden. Es kann sich hierbei prinzipiell um alle mono- oder polyfunktionellen Verbindungen handeln, welche funktionelle Gruppen aufweisen, die in einer Kondensationsreaktion mit Trialkanolaminen (Ia) und/oder Dialkanolaminen (Ib) reagieren können. Unter dem Begriff "Kondensation" soll hierbei in üblicher Art und Weise eine Reaktion verstanden werden, bei der zwei funktionelle Gruppen eine kovalente Bindung unter Abspaltung eines kleinen Moleküls, wie insbesondere Wasser bilden. Beispiele von Verbindungen (Id) umfassen Carbonsäuren, insbesondere Dicarbonsäuren, welche mit den Trialkanolaminen (Ia) und/oder Dialkanolaminen (Ib) Estergruppen ausbilden können. Derartige weitere Komponenten können zur Feinabstimmung der Eigenschaften der erfindungsgemäß verwendeten alkoxylierten Polyalkanolamine eingesetzt werden. Die Menge derartiger weiterer Verbindungen (Ib) sollte aber in der Regel 5 Gew. % bezüglich der Menge von (Ia), (Ib), (Ic) sowie (Id) nicht überschreiten. Bevorzugt beträgt die Menge weniger als 1 Gew. %, besonders bevorzugt weniger als 0,5 Gew. %, und ganz besonders bevorzugt werden keine weiteren Komponenten (Id) zur Kondensation verwendet.

Die Polykondensation der Komponenten (Ia) und/oder (Ib) sowie optional (Ic) oder (Id) kann nach dem Fachmann prinzipiell bekannten Methoden unter Erwärmen der Komponenten durchgeführt werden, wobei Wasser abgespalten wird. Geeignete Methoden sind beispielsweise von EP 441 198 A2 offenbart. Selbstverständlich können jeweils auch Gemische mehrerer verschiedener Komponenten (Ia), (Ib), (Ic) oder (Id) eingesetzt werden.

Die Kondensation wird üblicherweise bei Temperaturen von 120 bis 280°C, bevorzugt 150 bis 260°C und besonders bevorzugt 180 bis 240°C durchgeführt. Das gebildete Wasser wird bevorzugt abdestilliert. Die Reaktionsdauer beträgt üblicherweise 1 bis 16 h, bevorzugt 2 bis 8 h. Die Kondensationsgrad kann auf einfache Art und Weise durch die Reaktionstemperatur und -zeit kontrolliert werden.

Die Polykondensation wird bevorzugt in Gegenwart einer Säure, bevorzugt phosphorige Säure (H₃PO₃) und/oder hypophosphorige Säure (H₃PO₂) durchgeführt. Bevorzugte Mengen betragen 0,05 bis 2 Gew. %, bevorzugt 0,1 bis 1 Gew. % bezogen auf die zu kondensierenden Komponenten. Es können neben der Säure auch noch zusätzliche Katalysatoren eingesetzt werden, wie beispielsweise Zinkhalogeniden oder Aluminiumsulfat, ggf. im Gemisch mit Essigsäure, wie beispielsweise von US 4,505,839 offenbart.

Die Viskosität der erhaltenen Polyalkanolamine (II) liegt üblicherweise im Bereich von 1 000 bis 50 000 mPa·s, bevorzugt 2 000 bis 20 000 mPa·s und besonders bevorzugt 3 000 bis 10 000 mPa·s (jeweils am unverdünnten Produkt bei 20°C gemessen).

Die mittlere molare Masse Mₙ (Zahlenmittel) der erhaltenen Polyalkanolamine (II) liegt üblicherweise im Bereich von 250 bis 50 000 g/mol, bevorzugt 500 bis 40 000 g/mol, besonders bevorzugt 1000 bis 20 000 g/mol und ganz besonders bevorzugt 2000 to 10 000 g/mol.

### Stufe (B)

Die Polyalkanolamine (II) werden im zweiten Schritt alkoxyliert. Hierbei reagieren die OH-Gruppen sowie ggf. vorhandene sekundäre Aminogruppen mit Alkylenoxiden unter Bildung von terminalen Polyethergruppen.

Es können C₂- bis C₁₂-Alkylenoxide eingesetzt werden. Beispiele entsprechender Alkylenoxide umfassen Ethylenoxid und Propylenoxid sowie weiterhin 1-Butenoxid, 2,3-Butenoxid, 2-Methyl-1,2-propenoxid (Isobutenoxid), 1-Pentenoxid, 2,3-Pentenoxid, 2-Methyl-1,2-buten-oxid, 3-Methyl-1,2-butenoxid, 2,3-Hexenoxid, 3,4-Hexenoxid, 2-Methyl-1,2-pentenoxid, 2-Ethyl-1,2-butenoxid, 3-Methyl-1,2-Pentenoxid, Decenoxid, 4-Methyl-1,2-pentenoxid oder Styroloxid.

Bevorzugt werden Ethylenoxid und/oder Propylenoxid eingesetzt. Höhere Alkylenoxide werden im Regelfalle allenfalls in geringen Mengen zur Feinsteuerung der Eigenschaften eingesetzt. In der Regel beträgt die Menge an Ethylenoxid und/oder Propylenoxid mindestens 80 Gew. %, bevorzugt 95 Gew. % und besonders bevorzugt 95 Gew. % bezüglich der Summe aller eingesetzten Alkylenoxide.

Der durchschnittliche Alkoxylierungsgrad beträgt 1 bis 200, bevorzugt 5 bis 200, besonders bevorzugt 10 bis 150, ganz besonders bevorzugt 20 bis 100 und beispielsweise 20 bis 60 Alkyleneinheiten pro OH-Gruppe und -sofern vorhanden- pro sekundärer Aminogruppe im Ausgangsprodukt der Alkoxylierung, also dem Polyalkanolamin (II).

Sofern zwei oder mehrere verschiedene Alkylenoxide eingesetzt werden, kann es sich bei den gebildeten Polyoxyalkylengruppen um statistische Copolymere, Gradientencopolymere oder Blockcopolymere handeln. Bevorzugt handelt es sich um Blockcopolymere.

In einer bevorzugten Ausführungsform der Erfindung handelt es sich bei den Polyoxyalkylengruppen um Blockcopolymere, welche einen Block aus Ethylenoxideinheiten und einen Block aus C₃- bis C₁₂-Alkylenoxideinheiten, bevorzugt aus Polypropylenoxideinheiten aufweisen. Hierbei kann das Polyalkanolamin (II) zunächst ethoxyliert und dann mit C₃- bis C₁₂-Alkylenoxiden umgesetzt werden oder es kann in umgekehrter Reihenfolge vorgegangen werden. Die Anordnung der Blöcke kann vom Fachmann je nach dem gewünschten Trennproblem bestimmt werden.

In einer ersten besonders bevorzugten Ausführungsform der handelt es sich bei den Polyetherseitengruppen um Ethylenoxideinheiten und Propylenoxideinheiten umfassende Gruppen mit Blockstruktur, welche die allgemeine Formel -(CH₂CH₂O)ₓ(CH₂CH(CH₃)O)_{y}H aufweisen, wobei die Ethylenoxid- und die Propylenoxideinheiten auch tatsächlich in dieser Reihenfolge eingebaut sind, d.h. es wird zunächst ethoxyliert und dann propoxyliert. Die dermaßen alkoxylierten Polyalkanolamine (III) weisen also terminale Polypropylenoxidblöcke auf. In obiger Formel stehen x und y jeweils für Zahlen von 3 bis100, wobei bevorzugt das Verhältnis y/x > 1 ist. Bevorzugt steht x für 5 bis 50, besonders bevorzugt 8 bis 30 und y für 10 bis 50, bevorzugt 20 bis 50.

In einer zweiten besonders bevorzugten Ausführungsform der handelt es sich bei den Polyetherseitengruppen um Ethylenoxideinheiten und Propylenoxideinheiten umfassende Gruppen mit Blockstruktur, welche die allgemeine Formel -(CH₂CH(CH₃)O)_{w}(CH₂CH₂O)_{z}H aufweisen, wobei die Ethylenoxid- und die Propylenoxideinheiten auch tatsächlich in dieser Reihenfolge eingebaut sind, d.h. es wird zunächst propoxyliert und dann ethoxyliert. Die dermaßen alkoxylierten Polyalkanolamine (III) weisen also terminale Polyethylenoxidblöcke auf. In obiger Formel stehen w und z jeweils für Zahlen von 3 bis100, wobei bevorzugt das Verhältnis z/w > 1 ist.

Die Synthese von Alkylenoxideinheiten ist dem Fachmann bekannt. Einzelheiten sind beispielsweise in "Polyoxyalkylenes" in Ullmann's Encyclopedia of Industrial Chemistry, 6th Edition, Electronic Release ausführlich dargestellt.

Bevorzugt wird die Alkoxylierung in Gegenwart eines üblicher basischer Katalysatoren, wie beispielsweise Alkalihydroxiden, bevorzugt Kaliumhydroxid oder Alkalialkoholaten wie beispielsweise Natriummethylat vorgenommen. Weiterhin können auch Doppelmetallcyanid-Katalysatoren (DMC-Katalysatoren) verwendet werden. Geeignete DMC-Katalysatoren sind beispielsweise in der DE 102 43 361 A1, insbesondere den Abschnitten [0029] bis [0041] sowie der darin zitierten Literatur offenbart. Die Alkoxylierung kann in prinzipiell bekannter Art und weise in einem Druckreaktor bei 40 bis 250°C, bevorzugt 80 bis 200°C und besonders bevorzugt 100 bis 150°C vorgenommen werden. Zur richtigen Dosierung der Alkylenoxide ist es empfehlenswert, vor der Alkyoxylierung die Zahl der OH-Gruppen sowie ggf. die Zahl (sekundärer) Aminogruppen des Polyalkanolamins (II) bestimmt.

### Stufe (C)

Die erhaltenen alkoxylierten Polyalkanolamine (III) können optional in einem weiteren Reaktionsschritt (C) funktionalisiert werden. Eine zusätzliche Funktionalisierung kann dazu dienen, die Eigenschaften der alkoxylierten Polyalkanolamine (III) zu modifizieren. Hierzu werden die in den alkoxylierten Polyalkanolamine (III) vorhandenen Hydroxygruppen und/oder Aminogruppen mittels geeigneter Agentien, welche zur Reaktion mit Hydroxygruppen und/oder Aminogruppen befähigt sind umgesetzt. Hierdurch entstehen funktionalisierte alkoxylierten Polyalkanolamine.

Beispielsweise kann man die im alkoxylierten Polyalkanolamin vorhandenen tertiären Aminogruppen protonieren oder mittels geeigneter Alkylierungsagentien quaternisieren.

Die terminalen Hydroxylgruppen der Polyalkoxygruppen können mit geeigneten Reagenzien zur Derivatisierung umgesetzt werden, wobei Gruppen der allgemeinen Formel -(Alkoxy)ₙ-X gebildet werden, wobei es sich bei X um eine beliebige Gruppe handelt. Die Art der Funktionalisierung richtet sich nach dem gewünschten Einsatzzweck. Je nach Funktionalisierungsagens kann man das Kettenende hydrophobieren oder stärker hydrophilieren.

Die terminalen Hydroxylgruppen können beispielsweise mit Schwefelsäure oder Derivaten davon verestert werden, so dass Produkte mit terminalen Sulfatgruppen entstehen. Analog können mit Phosphorsäure, phosphoriger Säure, Polyphosphorsäure, POCl₃ oder P₄O₁₀ terminale phosphorhaltige Gruppen aufweisende Produkte erhalten werden.

Die terminalen Gruppen können auch mit Carbonsäuren verestert werden, so dass Polymere entstehen, welche Carbonsäureester-terminierte Polyakoxygruppen der allgemeinen Formel -(Alkoxy)ₙ-OC(O)-R⁶ aufweisen. Bei R⁶ handelt es sich bevorzugt um aliphatische, gesättigte oder ungesättigte, lineare oder verzweigte Kohlenwasserstoffreste mit 1 bis 30 C-Atomen, bevorzugt 6 bis 20 C-Atomen, bei denen nicht benachbarte Kohlenstoffatome optional auch noch durch O- oder N-Atome substituiert sein können. Bevorzugt handelt es sich bei R⁶ um reine Kohlenwasserstoffreste, besonders bevorzugt lineare Reste R⁶. Zur Veresterung können beispielsweise Monocarbonsäuren wie Dodecansäure, Hexadecansäure, Octadecansäure oder 9-Dodecensäure eingesetzt werden.

Weiterhin können die terminalen OH-Gruppen auch verethert werden, so dass Etherterminierte Polyakoxygruppen der allgemeinen Formel -(Alkoxy)ₙ-O-R⁶ entstehen, wobei R⁶ wie oben definiert ist.

Durch die Gruppen R⁶, insbesondere Gruppen R⁶ mit 6 bis 20 C-Atomen, wird das Kettenende hydrophobiert. Eine solche Hydrophobierung ist insbesondere empfehlenswert, falls es sich bei der Alkoxygruppe um eine Gruppe mit Blockstruktur handelt, bei der die Polypropylenoxideinheit terminal angeordnet ist.

### Verwendung der alkoxylierten Polyalkanolamine zur Demulgierung

Die hergestellten, alkoxylierten Polyalkanolamine werden erfindungsgemäß zum Spalten von Öl-Wasser-Emulsionen, insbesondere von Rohölemulsionen verwendet. Der Begriff "Öl-Wasser-Emulsionen" soll hierbei sowohl Wasser-in-Öl wie Öl-in-Wasser-Emulsionenumfassen. Die Öl-Wasser-Emulsionen können beispielsweise 0,1 bis 99 Gew. % Wasser, beziehungsweise Salzwasser enthalten. Bevorzugt können die erfindungsgemäß verwendeten Demulgatoren zur Trennung von Öl-Wasser-Emulsionen, bevorzugt Rohöl-Wasser-Emulsionen mit einem Wasser- bzw. Salzwassergehalt von 1 bis 98 Gew. %, besonders bevorzugt 5 bis 97 Gew. % und ganz besonders bevorzugt 10 bis 95 Gew. % verwendet werden. Bei den Ölkomponenten kann es sich um Ölkomponenten beliebiger Herkunft handeln.

Die alkoxylierten Polyalkanolamine werden den Öl-Wasser-Emulsionen, insbesondere der Rohölemulsionen, zur Spaltung vorzugsweise in gelöster Form zugesetzt. Als Lösemittel können unter anderem Wasser, Alkohole wie Methanol, Ethanol, Propanol, Isopropanol, Butanol, Ether wie Tetrahydrofuran oder Dioxan, paraffinische Lösemittel wie Hexan, Cyclohexan, Heptan, Octan, Isooctan oder Leichtbenzinfraktionen, oder aromatische Lösemittel wie Toluol, Xylol oder Solvent Naphtha verwendet werden. Dabei haben sich Demulgatorkonzentrationen in der Lösung von 10 bis 90 Gew. % bewährt.

Die Menge (in Gew.-ppm) der erfindungsgemäß verwendeten alkoxylierten Polyalkanolamine, bezogen auf den Ölgehalt der Rohölemulsion, beträgt dabei im Allgemeinen 0,1 ppm bis 5000 ppm vorzugsweise 1 ppm bis 3000 ppm, besonders bevorzugt 2 ppm bis 1000 ppm und speziell 5 ppm bis 500 ppm.

Anlagen und Verfahren zur Spaltung von Rohölemulsionen sind dem Fachmann bekannt. Die Emulsionsspaltung erfolgt dabei üblicherweise vor Ort, d.h. noch auf dem Ölfeld. Es kann sich dabei um eine Anlage an einer Produktionsbohrung handeln oder um eine zentrale Anlage, in welcher die Spaltung der Rohölemulsionen für mehrere Produktionsbohrungen eines Ölfeldes zusammen vorgenommen wird.

Die Spaltung verläuft bereits bei der Temperatur der frisch geförderten Rohölemulsion mit einer solchen Geschwindigkeit ab, dass die Emulsion bereits auf dem Weg zu der Aufbereitungsanlage gespalten werden kann. Diese gebrochene Emulsion wird dann in einem gegebenenfalls beheizten Abscheider und eventuell unter Zuhilfenahme eines elektrischen Feldes in Reinöl und Wasser, beziehungsweise Salzwasser getrennt. Bei dem Abscheider kann es sich um Anlagen handeln, welche nur unter dem Einfluss der Schwerkraft separieren, also beispielsweise Absetztanks oder auch um andere Abscheider, wie beispielsweise Hydrozyklone.

Die Trennung der Rohölemulsion erfolgt dabei in der Regel bei 10 -130°C, bevorzugt bei 40 - 90°C.

Da Rohöle aus einem Gemisch vieler chemischer Verbindungen bestehen, ist es in der Regel erforderlich, aufgrund der unterschiedlichen chemischen Zusammensetzung des Öls, der Wasser- und Salzanteile sowie der konkreten Bedingungen der Emulsionsspaltung, wie Temperatur, Dauer der Emulsionsspaltung, Art der Zudosierung und Wechselwirkungen mit weiteren Komponenten des Gemischs, den Demulgator auf die konkreten Bedingungen abzustimmen. Eine entsprechende Auswahl von alkoxylierten Polyalkanolaminen wird je nach dem Trennproblem vom Fachmann vorgenommen.

Die Anpassung der erfindungsgemäß verwendeten alkoxylierten Polyalkanolamine an das jeweilige Trennproblem kann beispielsweise durch entsprechende Auswahl des Polyalkanolamin-Grundkörpers oder der Länge und chemischen Zusammensetzung der terminalen Polyethergruppen erfolgen. Vorteilhaft können hierzu auch Mischungen verschiedener alkoxylierten Polyalkanolamine eingesetzt werden. Beispielsweise kann man eine Serie von Produkten unterschiedlicher Hydrophilie synthetisieren. Die Anpassung an das konkrete Trennproblem kann dann leicht erfolgen, indem man nur das Mengenverhältnis zweier oder mehrerer alkoxylierter Polyalkanolamine verändert. Die Anpassung der Hydrophilie kann leicht durch die Variation des EO/PO-Verhältnisses in den Polyethergruppen erfolgen. Besonders bewährt hat sich der Einsatz von alkoxylierten Polyalkanolaminen, bei denen die Polyoxyalkylengruppen Blockstruktur aufweisen. Hierbei hat es sich bewährt, Polyethylenoxid-Polypropylenoxidblöcke zum Trennen von Öl-in-Wasser-Emulsionen einzusetzen und Polypropylenoxid-Polyethylenoxidblöcke zum Trennen von Wasser-in-Öl-Emulsionen, ohne dass die Erfindung damit auf eine solche Zuordnung festgelegt sein soll.

Die erfindungsgemäß verwendeten alkoxylierten Polyalkanolamine können selbstverständlich auch in Mischung mit anderen Röhol-Demulgatoren eingesetzt werden. Bei weiteren Rohöldemulgatoren kann es sich beispielsweise oxyalkylierte Phenolformaldehydharze, EO/PO-Blockcopolymere bzw. mit Adipinsäure vernetzte EO/PO-Blockcopolymerere, vernetzte Diepoxide, Polyamide bzw. deren Alkoxylate, Salze der Sulfonsäuren oder ethyoxlierte und/oder propoxylierte Polyethylenimine handeln. Bevorzugt können EO/PO-Blockcopolymere, mit Adipinsäure veresterte EO/PO-Blockcopolymere oder ethoxlierte und/oder propoxylierte Polyethxylenimine eingesetzt werden. Entsprechende Rohöldemulgatoren sind beispielsweise in DE 25 40 173 oder EP 541 018 B1 offenbart. Besonders vorteilhaft können die erfindungsgemäß verwendeten alkoxylierten Polyalkanolamineauch mit Proteinen zur Emulsionsspaltung kombiniert werden, insbesondere mit Hydrophobinen. Nähere Einzelheiten zu Hydrophobinen als Emulsionsspalter sind von WO 2006/103251 offenbart.

Die Erfindung wird anhand der folgenden Beispiele näher erläutert.

### Herstellung der alkoxylierten Polyalkanolamine

Die Polyalkanolamine (II) wurden entsprechend der Literatur (EP441198, US5393463, Beispiele 1-3) durch Kondensation von Alkanolaminen in Gegenwart von hypophosphoriger Säure hergestellt.

### Reaktionsstufe (A): Herstellung von Polyalkanolaminen

### Beispiele 1 bis 4: Herstellung von Triethanolaminkondensaten

1499,7 g Triethanolamin und 9,75 g hypophosphorige Säure (50% ig in Wasser) werden unter Rühren und Durchleitung eines schwachen Stickstoffstroms auf 227°C aufgeheizt. Das gebildete Reaktionswasser wird abdestilliert. Nach 3-8 h Rührzeit wird die Reaktion durch Abkühlen auf Raumtemperatur abgebrochen. Je nach Rührzeit wird ein Triethanolaminkondensat unterschiedlicher Viskosität erhalten.

Die Reaktionsdauern und analytischen Daten sind in Tabelle 1 angegeben.

**Tabelle 1: Herstellung von Herstellung von Triethanolaminkondensaten**

| Nr. | Reaktionsdauer [h] | Viskosität [mPas] | Zahlenmittel Mₙ [g/mol] | Gewichtsmittel M_{w} [g/mol] | M_{w}/Mₙ | OH-Zahl [mg KOH/g] |
|---|---|---|---|---|---|---|
| Beispiel 1 | 3,5 | 3145 | 3200 | 5700 | 1,8 | |
| Beispiel 2 | 4,5 | 4490 | 3700 | 7800 | 2,1 | |
| Beispiel 3 | 7,0 | 8260 | 4400 | 13500 | 3,1 | 490 |
| Beispiel 4 | 7,5 | 10060 | 4400 | 14300 | 3,3 | 457 |

### Beispiel 5: Herstellung eines Triethanolamin-Glycerin-Kondensats

746,0 g Triethanolamin, 460,5 g Glycerin und 9,7 g hypophosphorige Säure (50% ig in Wasser) wurden in Gegenwart eines schwachen Stickstoffstroms bei 227°C 7,0 h gerührt. Das Reaktionswasser wurde abdestilliert. Die Reaktionsmischung wurde auf Raumtemperatur abgekühlt. Es wurde eine gelbe Flüssigkeit erhalten (Hydroxyl-Zahl: 830 mg KOH/g).

### Reaktionsstufe (B): Alkoxylierung

### Beispiel 6: Triethanolaminkondensat +24 EO +24 PO pro OH (Vergleichsbeispiel)

100,5 g des Triethanolaminkondensats gemäß Beispiel 3 wurden mit 3,8 g einer 40%igen wässrigen Kaliumhydroxidlösung in einen Autoklaven gegeben. Nach Entwässern im Vakuum bei 120°C wurden 926,9 g Ethylenoxid bei 130°C aufgepresst. Zur Vervollständigung der Reaktion wurde 2 h bei 130°C nachgerührt. Die Reaktionsmischung wurde mit Stickstoff gestrippt und flüchtige Komponenten wurden im Vakuum entfernt. Es wurden 1031,6 g eines braunen Feststoffs erhalten. 521,0 g dieses Materials wurden in einem Autoklaven vorgelegt und 617,3 g Propylenoxid wurden bei 140°C innerhalb von 10 h aufgepresst. Zur Vervollständigung der Reaktion wurde 2 h bei 140°C nachgerührt. Die Reaktionsmischung wurde mit Stickstoff gestrippt und flüchtige Komponenten wurden im Vakuum entfernt. Es wurden 1146 g eines hellbraunen Feststoffs erhalten (Amin-Titer: 0,4820 mmol/g).

### Beispiel 7: Triethanolaminkondensat +10 EO+ 30 PO pro OH

150 g des Triethanolaminkondensats gemäß Beispiel 4 wurden mit 8,4 g einer 40%igen wässrigen Kalium-hydroxidlösung in einen Autoklaven gegeben. Nach Entwässern im Vakuum bei 120°C wurden 536,9 g Ethylenoxid bei 130°C innerhalb von 6 h aufgepresst. Zur Vervollständigung der Reaktion wurde 5 h bei 130°C nachgerührt. Die Reaktionsmischung wurde mit Stickstoff gestrippt und flüchtige Komponenten wurden im Vakuum entfernt. Es wurden 692,0 g eines braunen Feststoffs erhalten. 225,2 g dieses Materials wurden in einem Autoklaven vorgelegt und 696,0 g Propylenoxid wurden bei 140°C innerhalb von 10 h aufgepresst. Zur Vervollständigung der Reaktion wurde 2 h bei 140°C nachgerührt. Die Reaktionsmischung wurde mit Stickstoff gestrippt und flüchtige Komponenten wurden im Vakuum entfernt. Es wurden 923 g einer hellbraunen Flüssigkeit erhalten.

### Beispiel 8: Triethanolamin-Glycerin-Kondensat+10 EO +30 PO pro OH

121,7 g des Triethanolamin-Glycerin-Kondensats gemäß Beispiel 5 (OH-Zahl: 830 mgKOH/g) wurden mit 11,1 g einer 40%igen wässrigen Kaliumhydroxidlösung in einen Autoklaven gegeben. Nach Entwässern im Vakuum bei 120°C wurden 792,0 g Ethylenoxid bei 120°C innerhalb von 8 h aufgepresst. Zur Vervollständigung der Reaktion wurde 5 h bei 120°C nachgerührt. Die Reaktionsmischung wurde mit Stickstoff gestrippt und flüchtige Komponenten wurden im Vakuum entfernt. Es wurden 925,0 g einer braunen Flüssigkeit erhalten. 204,8 g dieses Materials wurden in einem Autoklaven vorgelegt und 696,0 g Propylenoxid wurden bei 140°C innerhalb von 10 h aufgepresst. Zur Vervollständigung der Reaktion wurde 2 h bei 140°C nachgerührt. Die Reaktionsmischung wurde mit Stickstoff gestrippt und flüchtige Komponenten wurden im Vakuum entfernt. Es wurden 925 g einer braunen Flüssigkeit erhalten.

### Test der alkoxylierten Polyalkanolamine zum Spalten von Rohöl-Wasser-Emulsionen

Prüfung der Eignung der erfindungsgemäßen alkoxylierten Polyalkanolamine als Demulgator durch Messung der Wasserabspaltung aus einer Rohölemulsion

5 g des zu prüfenden Demulgators wurde in einen 100 ml Messkolben eingewogen, dieser mit Xylol / Isopropanol-Gemisch 3:1 (bez. auf Volumen) bis zur Ringmarke aufgefüllt und das Polymer durch Schütteln darin gelöst.

Eine Rohölemulsion der Wintershall AG, Emlichheim, Sonden 25, 83, 87,109, 301, 507 (1:1:1:1:1:2) mit einem Wassergehalt von 53 Vol.-% wurde für ca. 2 h im Wasserbad in einem nicht fest verschlossenen Behälter auf eine Temperatur von 52°C erwärmt. Die Rohölemulsion wurde ca. 30 sec durch Schütteln homogenisiert, dann wurden jeweils 100 ml der Ölemulsion in 100 ml-Schüttelzylinder gefüllt. Die mit Öl gefüllten Schüttelzylinder wurden in das Wasserbad eingesetzt.

Mit einer Eppendorf - Pipette wurden jeweils 50 µl der 5 Gew.-%igen Lösung des zu prüfenden Demulgators in den Schüttelzylinder mit Rohölemulsion dosiert und der Zylinder mit dem Glasstopfen verschlossen (25 mg Demulgator / I Emulsion; ca. 250 ppm). Danach wurde der Schüttelzylinder aus dem Wasserbad heraus genommen, 60 mal geschüttelt und entspannt. Der Schüttelzylinder wurde nun wieder in das Wasserbad gestellt und der Kurzzeitmesser gestartet. Das Volumen des sich nun abscheidenden Wassers wurde nach 15, 30, 45, 60, 120 und 240 min abgelesen. Die Ergebnisse sind in Tabelle 2 zusammengefasst.

**Tabelle 2: Ergebnisse der Demulgierversuche**

| Nr. | | Wasserabspaltung in ml | | | | | |
|---|---|---|---|---|---|---|---|
| | | 15 min | 30 min | 45 min | 60 min | 120 min | 240 min |
| V1 | Ohne Demulgator | 0 | 0 | 1 | 3 | 20 | 32 |
| V2 | Beispiel 3, keine Alkoxylierung | 0 | 0 | 1 | 3 | 16 | 29 |
| Beispiel 6 | 24 EO + 24 PO | 0 | 2 | 8 | 13 | 29 | 36 |
| Beispiel 7 | 10 EO + 30 PO | 10 | 25 | 32 | 34 | 37 | 40 |
| Beispiel 8 | 10 EO + 31 PO | 15 | 26 | 28 | 30 | 33 | 37 |

Die Beispiele und Vergleichsbeispiele zeigen, dass die zum Trennen von Öl-in-Wasser-Emulsionen mit geringem Ölgehalt bekannten, nicht alkoxylierten Polyalkanolamine bei der Spaltung der vorliegenden Wasser-Öl-Emulsion mit annähernd gleichen Anteilen von Wasser und Öl keine Wirkung zeigen. Durch die Alkoxylierung der Polyalkanolamine werden jedoch gut wirksame Demulgatoren erhalten. Bei Verwendung der alkoxylierten Produkte steigt die Menge des abgeschiedenen Wassers insbesondere bei kurzen Zeiten sehr deutlich an.

## Patentansprüche

1. Verwendung von Polyalkanolaminen zum Spalten von Öl-Wasser-Emulsionen, **dadurch gekennzeichnet, dass** es sich um alkoxylierte Polyalkanolamine (III) handelt, welche nach dem folgenden Verfahren erhältlich sind:
(A) Kondensieren von mindestens einem Trialkanolamin der allgemeinen Formel N(R¹-OH)₃ (la) und/oder mindestens einem Dialkanolamin der allgemeinen Formel R²-N(R¹-OH)₂ (Ib) zu einem Polyalkanolamin (II),
wobei
• die Reste R¹ unabhängig voneinander für einen zweiwertigen, linearen oder verzweigten aliphatischen Kohlenwasserstoffrest mit 2 bis 6 Kohlenstoffatomen,
• die Reste R² für Wasserstoff und/oder lineare oder verzweigte aliphatische, cycloalphatische und/oder aromatische Kohlenwasserstoffreste mit 1 bis 30 Kohlenstoffatomen stehen, und
• die erhaltenen Polyalkanolamine (II) eine mittlere molare Masse (Zahlenmittel) von 1000 g/mol bis 20000 g/mol aufweisen,
(B) Alkoxylieren des erhaltenen Polyalkanolamins (II) mit Ethylenoxid und Propylenoxid, wobei
• die gebildeten Polyoxyalkylengruppen Blockstruktur der allgemeinen Formel -(CH₂CH₂O)ₓ(CH₂CH(CH₃)O)_{y}H aufweisen, wobei die Ethylenoxid- und die Propylenoxideinheiten in der dargestellten Reihenfolge eingebaut sind, x für eine Zahl von 8 bis 30 und y für eine Zahl von 20 bis 50 steht, und
• das Verhältnis y/x > 1 ist.

2. Verwendung gemäß Anspruch 1, **dadurch gekennzeichnet, dass** es sich bei (la) um mindestens ein Trialkanolamin ausgewählt aus der Gruppe von Triethanolamin, Triisopropanolamin und Tributan-2-olamin handelt.

3. Verwendung gemäß Anspruch 1 oder 2, **dadurch gekennzeichnet, dass** man zur Kondensation zusätzlich mindestens eine zwei Hydroxy- und/oder Aminogruppen aufweisende Komponente (Ic) in einer Menge von nicht mehr als 50 Gew. % bezüglich der Menge aller zur Kondensation eingesetzten Komponenten einsetzt.

4. Verwendung gemäß Anspruch 3, **dadurch gekennzeichnet, dass** es sich bei (Ic) um Polyole der allgemeinen Formel R³(OH)ₙ handelt, wobei n für eine natürliche Zahl von 2 bis 4 steht und R³ für einen n-wertigen linearen oder verzweigten aliphatischen, cycloaliphatischen oder aromatischen Kohlenwasserstoffrest mit 2 bis 10 Kohlenstoffatomen.

5. Verwendung gemäß einem der Ansprüche 1 bis 4, **dadurch gekennzeichnet, dass** man die alkoxylierten Polyalkanolamine (III) in einem weiteren Verfahrensschritt (C) mittels geeigneter Reagenzien, welche zur Reaktion mit Hydroxygruppen und/oder Aminogruppen befähigt sind, umsetzt.

6. Verwendung gemäß Anspruch 5, **dadurch gekennzeichnet, dass** man die terminalen Hydroxygruppen der Polyoxyalkylengruppen verethert und/oder verestert.

7. Verwendung gemäß Anspruch 6, **dadurch gekennzeichnet, dass** es sich bei den funktionalisierten Polyoxyalkylengruppen um solche der allgemeinen Formel - (Alkoxy)ₙ-OC(O)-R⁶ oder -(Alkoxy)ₙ-O-R⁶ handelt, wobei es sich bei R⁶ um einen aliphatischen, gesättigten oder ungesättigten, linearen oder verzweigten Kohlenwasserstoffrest mit 1 bis 30 C-Atomen handelt.

8. Verwendung gemäß einem der Ansprüche 1 bis 7, **dadurch gekennzeichnet, dass** es sich bei der Emulsion um eine Rohölemulsion handelt.

9. Verwendung gemäß Anspruch 8, **dadurch gekennzeichnet, dass** die Rohölemulsion einen Wassergehalt von 10 bis 95 Gew. % Wasser bezüglich der Summe aller Komponenten der Emulsion aufweist.

10. Verwendung gemäß einem der Ansprüche 1 bis 9, **dadurch gekennzeichnet, dass** man die alkoxylierten Polyalkanolamine in Kombination mit mindestens einem weiteren Emulsionsspalter einsetzt.

## Claims

1. The use of polyalkanolamines for splitting oil-water emulsions, wherein the polyalkanolamines are alkoxylated polyalkanolamines (III) which are obtainable by the following process:
(A) condensing at least one trialkanolamine of the general formula N(R¹-OH)₃ (Ia) and/or at least one dialkanolamine of the general formula R²-N(R¹-OH)₂ (Ib) to give a polyalkanolamine (II), where
• the R¹ radicals are each independently a divalent, linear or branched aliphatic hydrocarbon radical having from 2 to 6 carbon atoms,
• the R² radicals are each hydrogen and/or linear or branched aliphatic, cycloaliphatic and/or aromatic hydrocarbon radicals having from 1 to 30 carbon atoms, and
• the resulting polyalkanolamines (II) have a mean molar mass (number average) of from 1000 g/mol to 20 000 g/mol,
(B) alkoxylating the resulting polyalkanolamine (II) with ethylene oxide and propylene oxide, where
• the polyoxyalkylene groups formed have block structure of the general formula - (CH₂CH₂O)ₓ(CH₂CH(CH₃)O)_{y}H, where the ethylene oxide units and the propylene oxide units are incorporated in the order shown, x is a number from 8 to 30 and y is a number from 20 to 50, and
• the y/x ratio is > 1.

2. The use according to claim 1, wherein (Ia) is at least one trialkanolamine selected from the group of triethanolamine, triisopropanolamine and tributan-2-olamine.

3. The use according to claim 1 or 2, wherein at least one component (Ic) having two hydroxyl and/or amino groups is used additionally for the condensation in an amount of not more than 50% by weight based on the amount of all components used for the condensation.

4. The use according to claim 3, wherein (Ic) comprises polyols of the general formula R³(OH)ₙ, where n is a natural number from 2 to 4 and R³ is an n-valent linear or branched aliphatic, cycloaliphatic or aromatic hydrocarbon radical having from 2 to 10 carbon atoms.

5. The use according to any of claims 1 to 4, wherein the alkoxylated polyalkanolamines (III) are converted in a further process step (C) by means of suitable reagents which are capable of reaction with hydroxyl groups and/or amino groups.

6. The use according to claim 5, wherein the terminal hydroxyl groups of the polyoxyalkylene groups are etherified and/or esterified.

7. The use according to claim 6, wherein the functionalized polyoxyalkylene groups are those of the general formula-(alkoxy)ₙ-OC(O)-R⁶or - (alkoxy)ₙ-O-R⁶, where R⁶ is an aliphatic, saturated or unsaturated, linear or branched hydrocarbon radical having from 1 to 30 carbon atoms.

8. The use according to any of claims 1 to 7, wherein the emulsion is a crude oil emulsion.

9. The use according to claim 8, wherein the crude oil emulsion has a water content of from 10 to 95% by weight of water based on the sum of all components of the emulsion.

10. The use according to any of claims 1 to 9, wherein the alkoxylated polyalkanolamines are used in combination with at least one further emulsion splitter.

## Revendications

1. Utilisation de polyalcanolamines pour la séparation d'émulsions huile-eau, **caractérisée en ce qu'**il s'agit de polyalcanolamines alcoxylées (III) qui peuvent être obtenues par le procédé suivant :
(A) la condensation d'au moins une trialcanolamine de formule générale N(R¹-OH)₃ (Ia) et/ou d'au moins une dialcanolamine de formule générale R²-N(R¹-OH)₂ (Ib) en une polyalcanolamine (II)
- les radicaux R¹ représentant indépendamment les uns des autres un radical hydrocarboné aliphatique bivalent linéaire ou ramifié de 2 à 6 atomes de carbone,
- les radicaux R² représentant l'hydrogène et/ou des radicaux hydrocarbonés aliphatiques, cycloaliphatiques et/ou aromatiques, linéaires ou ramifiés, de 1 à 30 atomes de carbone, et
- les polyalcanolamines (II) obtenues présentant une masse molaire moyenne (moyenne en nombre) de 1 000 g/mol à 20 000 g/mol,
(B) l'alcoxylation de la polyalcanolamine (II) obtenue avec de l'oxyde d'éthylène et de l'oxyde de propylène,
- les groupe polyoxyalkylène formés présentant une structure séquencée de formule générale - (CH₂CH₂O)ₓ(CH₂CH(CH₃)O)_{y}H, les unités oxyde d'éthylène et les unités oxyde de propylène étant incorporées dans l'ordre représenté, x représentant un nombre de 8 à 30 et y un nombre de 20 à 50, et
- le.rapport y/x étant > 1.

2. Utilisation selon la revendication 1, **caractérisée en ce que** (Ia) consiste en au moins une trialcanolamine choisie dans le groupe constitué par la triéthanolamine, la triisopropanolamine et la tributan-2-olamine.

3. Utilisation selon la revendication 1 ou 2, **caractérisée en ce qu'**au moins un composant (Ic) comprenant deux groupes hydroxy et/ou amino est également utilisé pour la condensation en une quantité inférieure ou égale à 50 % en poids par rapport à la quantité de tous les composants utilisés pour la condensation.

4. Utilisation selon la revendication 3, **caractérisée en ce que** (Ic) consiste en des polyols de formule générale R³ (OH)ₙ, n représentant un nombre naturel de 2 à 4 et R³ un radical hydrocarboné aliphatique, cycloaliphatique ou aromatique, linéaire ou ramifié, n-valent, de 2 à 10 atomes de carbone.

5. Utilisation selon l'une quelconque des revendications 1 à 4, **caractérisée en ce que** les polyalcanolamines alcoxylées (III) sont transformées lors d'une étape de procédé (C) supplémentaire au moyen de réactifs appropriés, qui sont réactifs avec les groupes hydroxy et/ou les groupes amino.

6. Utilisation selon la revendication 5, **caractérisée en ce que** les groupes hydroxy terminaux des groupes polyoxyalkylène sont éthérifiés et/ou estérifiés.

7. Utilisation selon la revendication 6, **caractérisée en ce que** les groupes polyoxyalkylène fonctionnalisés sont des groupes de formule générale -(alcoxy)ₙ-OC(O)-R⁶ ou -(alcoxy)ₙ-O-R⁶, R⁶ étant un radical hydrocarboné aliphatique, saturé ou insaturé, linéaire ou ramifié, de 1 à 30 atomes C.

8. Utilisation selon l'une quelconque des revendications 1 à 7, **caractérisée en ce que** l'émulsion est une émulsion de pétrole brut.

9. Utilisation selon la revendication 8, **caractérisée en ce que** l'émulsion de pétrole brut présente une teneur en eau de 10 à 95 % en poids par rapport à la somme de tous les composants de l'émulsion.

10. Utilisation selon l'une quelconque des revendications 1 à 9, **caractérisée en ce que** les polyalcanolamines alcoxylées sont utilisées en combinaison avec au moins un séparateur d'émulsion supplémentaire.
